# EUROPÄISCHE PATENTANMELDUNG

(11) **EP 1 757 181 A1**
(43) Veröffentlichungstag der Anmeldung: **28.02.2007**
(21) Anmeldenummer: 06016996.8
(22) Anmeldetag: 16.08.2006
(51) Int. Cl.: A01D 41/06, A01D 45/02

(54) **Erntevorrichtung zum Ernten von Bestandteilen einer Pflanze und Verfahren hierfür**

(30) Priorität: 23.08.2005 DE 102005039708
(71) Anmelder: Linsel, Tobias, Dipl.-Ing., 34359 Reinhardshagen (DE); Schmerse, Stefan, 34125 Kassel (DE)
(72) Erfinder: Linsel, Tobias, Dipl.-Ing., 34359 Reinhardshagen (DE); Schmerse, Stefan, 34125 Kassel (DE)
(74) Vertreter: WALTHER, WALTHER & HINZ Patentanwälte - European Patent Attorneys

(57) **Zusammenfassung**

Gegenstand der Erfindung ist eine Erntevorrichtung zum Ernten von Bestandteilen einer Pflanze, insbesondere von Samen, Früchten oder Blüten, mit zwei in einem Gehäuse (10) angeordneten und um ihre Längsachsen gegenläufig rotierenden Rotationswerkzeugen (12), wobei im Gehäuse (10) eine Öffnung (14) zum Eintritt eines Teiles der Pflanze vorgesehen ist, so dass die Pflanzen zwischen die Walzen (12) geleitet und derart bearbeitet werden, dass sich Samen, Früchte, Blüten und/oder andere Bestandteile von der Pflanze lösen und nach oben schleudern. Eine Erntevorrichtung zu schaffen, so dass eine gezielte und kostengünstige Ernte der reifen Bestandteile einer Pflanze möglich wird, ohne dass die nicht zu erntenden Bestandteile der Pflanze verletzt oder abgerissen werden wird durch eine derart am Gehäuse (10) angebrachte Druckluftschleuse erreicht, dass im Gehäuse (10) ein Luftstrom erzeugt wird, der die gelösten Bestandteile der Pflanze aus dem Gehäuse (10) heraus in eine Transportleitung (18) transportiert.

## Beschreibung

Die vorliegende Erfindung betrifft eine Erntevorrichtung gemäß dem Oberbegriff des Anspruches 1 und ein Ernteverfahren gemäß dem Oberbegriff des Anspruches 12.

Bei der maschinellen Ernte von reifen Samen, Blüten, Früchten oder anderen Bestandteilen einer Pflanze wird zunächst die gesamte Pflanze abgeerntet, bevor in einem weiteren Arbeitschritt der landwirtschaftlich wertvolle Bestandteil der Pflanze von den übrigen Bestandteilen getrennt wird, wie beispielsweise beim Dreschen. Hierzu sind vergleichsweise große und schwere Maschinen erforderlich, die zum Einen teuer in der Anschaffung und im Unterhalt sind und zum Anderen die landwirtschaftliche Fläche aufgrund des großen Gewichtes verdichten, so dass nach der Ernte eine aufwändige Lockerung des Erdreiches erforderlich ist.

Um diese Nachteile zumindest bei der Ernte von Soja zu vermeiden ist in der US 2002/0004418 A1 eine Erntevorrichtung vorgeschlagen worden, bei der die Sojapflanzen von zwei gegenläufig rotierenden Bürstenwalzen erfasst und die reifen Sojafrüchte schonend von der Pflanze abgebürstet werden. Dabei werden die Sojafrüchte von den rotierenden Bürstenwalzen in die Luft geschleudert und von einem Leitblech in ein anderes Segment der Erntevorrichtung geführt. In diesem Zielbereich ist ein Luftkissen aufgebaut, welches so eingestellt ist, dass lediglich die schweren Sojafrüchte nach unten fallen können, durch ein Gitter hindurch gelangen und in einem Transportkanal abtransportiert werden. Die anderen, leichteren Bestandteile werden vom Luftkissen aus der Erntevorrichtung heraustransportiert.

Die aus der US 2002/0004418 A1 bekannte Erntevorrichtung ist bauartbedingt so breit, dass eine Aneinanderreihung mehrerer Erntevorrichtung an ein Zugfahrzeug zur gleichzeitigen Ernte mehrerer Reihen einer Reihenkultur nicht möglich ist, was die Einsatzmöglichkeiten stark einschränkt.

Außerdem geht ein bestimmter Anteil der Sojafrüchte bei der Ernte dadurch verloren, dass diese entweder gar nicht zum Luftkissen gelangen und im Bereich der Bürstenwalzen zu Boden fallen oder dass diese versehentlich über das Luftkissen ausgetragen werden.

Auch können andere landwirtschaftliche Erzeugnisse wie zum Beispiel Blüten hiermit nicht abgeerntet werden und müssen nach wie vor von Hand geerntet werden.

Aus der DE 27 37 115 A1 ist eine Erntemaschine mit einer Pflückvorrichtung zum Ernten von Schneidebohnen und sonstigen Hülsenfrüchten, Getreidepflanzen oder einzelnen Halbpflanzen offenbart. Hierbei werden die in die Erntemaschine eintretenden Pflanzen über einen Luftstrom zu einer Pflücktrommel hin bewegt, welche das Erntegut von der Pflanze abtrennt. Diese um eine Querachse rotierende Pflücktrommel schleudert dann das abgepflückte Erntegut auf ein hinter der Pflücktrommel angeordnetes Transportband, mit welchem das Erntegut dann in den Sammelbehälter gebracht wird. Dabei unterstützt der Luftstrom die Bewegung des Erntegutes zum Transportband hin.

Bei dieser Erntemaschine wird von der Pflücktrommel nicht alles Erntegut erfasst, insbesondere das auf der der Pflücktrommel abgewandten Seite der Pflanze befindliche Erntegut wird nicht abgeerntet. Darüber hinaus wird zumindest ein Teil des Erntegutes mit erheblicher Geschwindigkeit auf das Transportband geschleudert, so dass hier Beschädigungen des Erntegutes zu befürchten sind. Darüber hinaus ist die gesamte Erntemaschine so ausgelegt, dass nach dem Abernten des Erntegutes die verbleibende Pflanze so stark beschädigt wird, dass ein Weiterleben der Pflanze nicht möglich ist.

Davon ausgehend liegt der vorliegenden Erfindung die Aufgabe zu Grunde, eine Erntevorrichtung und ein Ernteverfahren der eingangs genannten Art zu schaffen, mit dem die Samen, Blüten , Früchte oder anderen Bestandteile einer Pflanze maschinell und schonend von der auf dem Feld verbleibenden Pflanze getrennt werden, ohne dass eine nennenswerter Teil der Ernte verloren geht.

Als technische Lösung dieser Aufgabe wird erfindungsgemäß eine Erntevorrichtung gemäß den Merkmalen des Anspruches 1 und ein Ernteverfahren gemäß den Merkmalen des Anspruches 12 vorgeschlagen. Vorteilhafte Weiterbildungen dieser Erntevorrichtung und dieses Ernteverfahrens sind den jeweiligen Unteransprüchen zu entnehmen.

Eine nach dieser technischen Lehre ausgebildete Erntevorrichtung und ein nach dieser technischen Lehre ausgeführtes Ernteverfahren haben den Vorteil, dass die durch die Rotationswerkzeuge gezielt abgetrennten Bestandteile der Pflanzen durch den Luftstrom nahezu vollständig und sehr schonend abtransportiert werden.

Durch den schonenden Abtransport wird unter anderem erreicht, dass die Samen, Früchte oder Blüten weder beschädigt werden noch verloren gehen, so dass eine sehr ergiebige und qualitativ hochwertige Ernte erreicht wird. Bei manchen Pflanzensorten kann das Erntegut sogar als Saatgut eingesetzt werden, so dass die hierfür übliche Handernte entfallen kann.

Ein weiterer Vorteil besteht darin, dass mehrere Erntevorrichtungen derart nebeneinander angeordnet an ein Zugfahrzeug gehängt werden können, dass mehrere Reihen einer Reihenkultur gleichzeitig abgeerntet werden können. Dabei ist die Erntevorrichtung noch so leicht, dass keine nennenswerte Verdichtung des Bodens erfolgt.

In einer bevorzugten Ausführungsform wird der Luftstrom derart an den Öffnungen des Gehäuses vorbeigeführt, dass hier eine Art Luftschleuse entsteht. Dies hat den Vorteil, dass herunterfallende Samen, Früchte, Blüten oder andere Bestandteile der Pflanze vor Verlassen des Gehäuses durch den Luftstrom erfasst und zur Transportleitung gebracht werden, so dass kein Erntegut verloren geht.

Hierzu hat es sich als vorteilhaft erwiesen, die Druckluftschleuse so anzuordnen, dass deren Luftdüsen am Rand des Gehäuses nahe der Öffnung angebracht sind, so dass der aus den Luftdüsen austretende Luftstrom sich über die Öffnung verteilt und diese durch eine sogenannte Luftschleuse quasi verschließt. Die Ausrichtung zumindest eines Teils der Luftdüsen in Richtung der Transportleitung hat dabei den Vorteil, dass das vom Luftstrom erfasste Erntegut in einfacher Weise in die Transportleitung gebracht werden kann.

Es versteht sich, dass die Luftdüsen an gegenüberliegenden Seiten des Gehäuses nicht direkt aufeinander zu gerichtet sind, da sich die jeweiligen Luftströme dann aufheben würden. Vielmehr sind die Luftdüsen so ausgerichtet, dass sich die jeweiligen Luftströme in einem spitzen Winkel treffen. Dies hat den Vorteil, dass sich die jeweiligen Luftströme hierbei nicht gegenseitig bremsen, sondern zumindest teilweise vereinen und somit in der Lage sind, das Erntegut mitzureißen. Idealerweise sind die Luftdüsen zumindest grob in Richtung der Transportleitung ausgerichtet, um das ganze Gut auf direktem Wege in die Transportleitung bringen zu können.

In einer bevorzugten Weiterbildung sind einige erste Luftdüsen quer zur Längsachse der Rotationswerkzeuge ausgerichtet und unterhalb der Rotationswerkzeuge angeordnet. Der aus diesen Luftdüsen austretende Luftstrom gelangt durch die Rotationswerkzeuge hindurch oder an ihnen vorbei und bewegt sich in die selbe Richtung, wie das von den Rotationswerkzeugen nach oben geschleuderte Erntegut. Hierdurch wird die schon vorhandene Bewegung des Erntegutes durch den Luftstrom unterstützt, so dass das Erntegut mit wenig Energieaufwand in die Transportleitung gebracht werden kann. Dabei muss der Luftstrom nicht unmittelbar auf die Rotationswerkzeuge gerichtet sein, sondern kann auch an den Rotationswerkzeugen vorbei geführt werden. Dies gilt insbesondere für die die Luftschleuse bildenden Luftdüsen an gegenüberliegenden Seiten der Öffnung des Gehäuses, denn die aus diesen Luftdüsen austretenden Luftströme sollten vorzugsweise in einem spitzen Winkel aufeinandertreffen.

In einer bevorzugten Ausführungsform ist an der Vorderseite des Gehäuses eine horizontal ausgerichtete Querverteilung vorgesehen, aus der ein zweiter Luftstrom in das Gehäuse eintritt. Dieser Luftstrom ist direkt und ohne Umwege auf die Transportleitung gerichtet und erzeugt einen zusätzlichen Mitnahmeeffekt für das Erntegut. Vorteilhafterweise wird dieser zweite Luftstrom entlang einer Abdeckhaube des Gehäuses zur Transportleitung geleitet, so dass hier sehr günstige und widerstandsarme Verhältnisse vorherrschen. Dieser zweite Luftstrom hat den Vorteil, dass hiermit das bereits oberhalb der Rotationswerkzeuge befindliche Erntegut sicher und zuverlässig in die Transportleitung geführt wird. Ein weiterer Vorteil besteht darin, dass der Abtransport oberhalb der Rotationswerkzeuge durch den zweiten Luftstrom erfolgt, so dass die Druckluftschleuse das Erntegut lediglich bis oberhalb der Rotationswerkzeuge transportieren muss und somit kleiner und energiesparender ausgelegt werden kann.

In einer bevorzugten Ausführungsform sind in Fahrtrichtung vorne am Gehäuse Pflanzenzuführeinrichtungen angebracht, mit denen die Pflanzen gezielt in den Bereich zwischen zwei Rotationswerkzeuge geführt werden. Hierbei werden einzelne Blätter oder Zweige der Pflanzen aufgerichtet beziehungsweise hochgedrückt, so dass eine schonende Bearbeitung durch die Rotationswerkzeuge möglich wird.

In einer anderen, bevorzugten Ausführungsform hat es sich als vorteilhaft erwiesen, die Rotationswerkzeuge V-förmig anzuordnen. Dies ist insbesondere bei unregelmäßig angepflanzten Pflanzen vorteilhaft, da hierbei die Pflanzen erst leicht von dem Rotationswerkzeug traktiert werden und wobei die Bearbeitung der Pflanze immer intensiver wird. Durch diesen sanften Einstieg der Pflanzen in dem Bereich zwischen den Rotationswerkzeugen werden unerwünschte Beschädigungen auf ein Minimum reduziert.

In einer ganz bevorzugten Ausführungsform sind die Rotationswerkzeuge in Fahrtrichtung nach unten geneigt mit einem Neigungswinkel von vorzugsweise 45°. Hierdurch wird die Pflanze zunächst an ihrem unteren Teil von den Rotationswerkzeugen erfasst und eventuell vorhandene Zweige oder Blätter werden durch die Rotationswerkzeuge nach oben bewegt, so dass ein Abbrechen unerwünschter Bestandteile vermieden wird.

Die erfindungsgemäße Erntevorrichtung kann nicht nur zum Ernten von Samen, Früchten oder Blüten eingesetzt werden, sondern mit den Rotationswerkzeugen in Kombination mit dem Luftstrom können die Pflanzen auch gereinigt werden. Ebenso können durch die Rotationswerkzeuge an den Pflanzen anhaftende Schädlinge abgelöst und durch den Luftstrom abtransportiert werden. Auch ist es möglich, bereits abgestorbene Bestandteile der Pflanzen durch die Rotationswerkzeuge zu entfernen und somit für ein besseres Wachstum der Pflanzen zu sorgen.

Ein ganz bevorzugtes Einsatzgebiet der Erntevorrichtung ist aber das Benetzen der Pflanze mit einer Flüssigkeit, wobei die Flüssigkeit reines Wasser, Wasser mit Pflanzenschutzmitteln oder Wasser mit Düngemittel sein kann. Dabei wird im Inneren des Gehäuses eine Düse zur Abgabe der Flüssigkeit derart integriert, dass die Flüssigkeit in Richtung des Luftstromes in das Gehäuse gelangt. Wird die Pflanze mit der Flüssigkeit benetzt, kann überschüssige und abtropfende Flüssigkeit von der Druckluftschleuse dem Luftstrom wieder zugeführt werden. Auch ist es möglich, die Flüssigkeit direkt in den Luftstrom der Druckluftschleuse und/oder in den Luftstrom des zweiten Luftstromes einzubringen, so dass eine großflächige Verteilung der Flüssigkeit erfolgen kann.

In einem bevorzugten Ernteverfahren werden die Rotationswerkzeuge so eingestellt, dass lediglich das wirklich reife Erntegut geerntet wird, während die noch nicht ganz oder die noch unreifen Teile an der Pflanze belassen und in einem späteren Erntevorgang geerntet werden. Dies hat den Vorteil, dass das Erntegut eine gleichmäßige Qualität aufweist und nicht nachbehandelt werden braucht. Auch das Zwischenlagern des Erntegutes zwecks nachreifen entfallen.

Weitere Vorteile der erfindungsgemäßen Erntevorrichtung und des erfindungsgemäßen Ernteverfahrens ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine Schemaskizze einer geschnitten dargestellten, erfindungsgemäßen Erntevorrichtung in Seitenansicht während des Erntevorganges;
- Fig. 2: eine schematische, geschnitten dargestellte Seitenansicht der Erntevorrichtung gemäß Fig. 1;
- Fig. 3: eine schematische, geschnitten dargestellte Draufsicht auf eine Erntevorrichtung gemäß Fig. 1;
- Fig. 4: eine schematische Frontansicht der Erntevorrichtung gemäß Fig. 1.

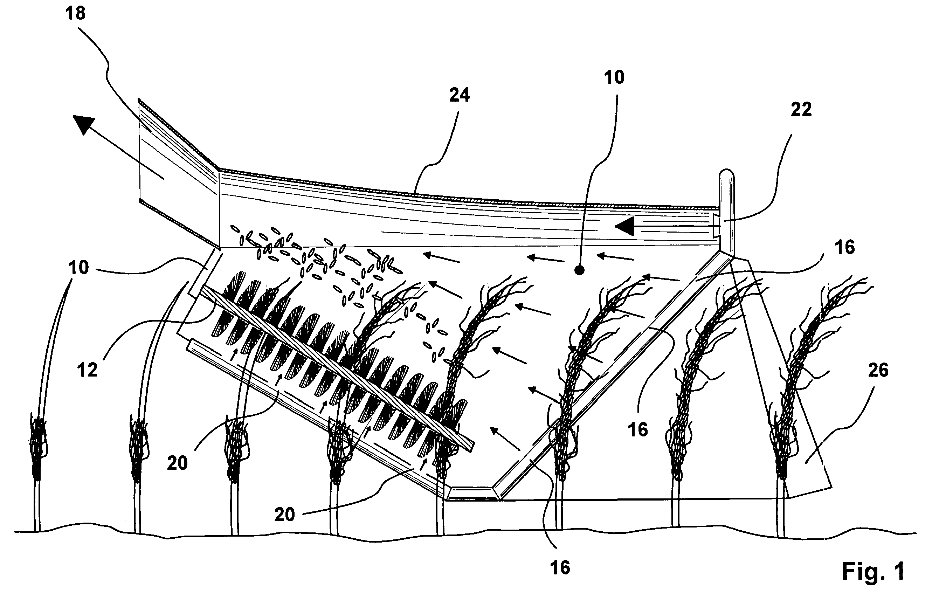

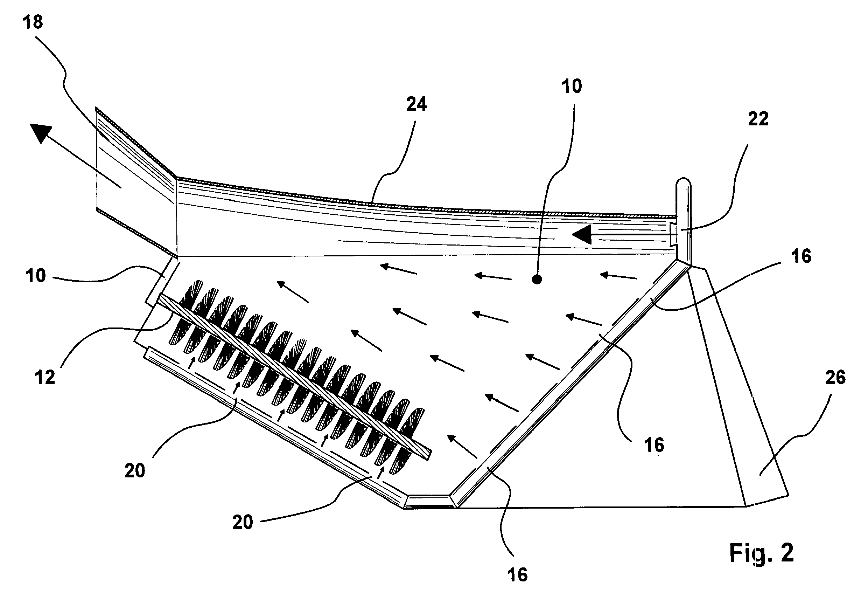

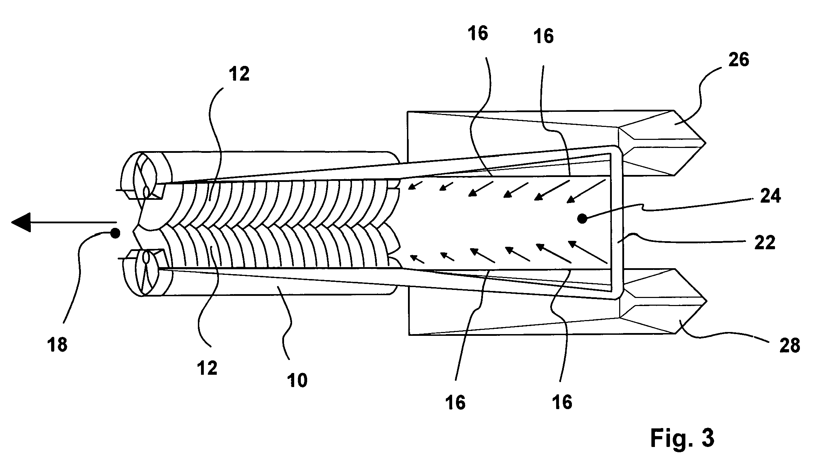

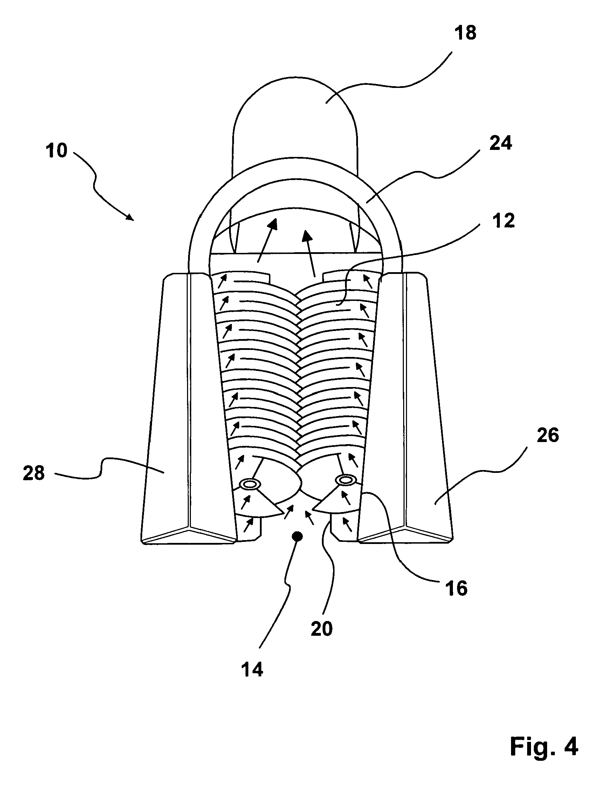

In Figur 1 ist eine Gesamtschau der erfindungsgemäße Erntevorrichtung während des Erntevorgangs dargestellt, während in den Figuren 2 bis 4 einzelne Ansichten der Erntevorrichtung dargestellt sind.

Diese Erntevorrichtung umfasst ein Gehäuse 10, in dem zwei parallel angeordnete und sich gegenläufig um ihre Längsachse rotierende Rotationswerkzeuge 12 vorgesehen sind. Die Rotationswerkzeuge 12 sind als Bürstenwalzen ausgeführt und mit einer Anzahl vorzugsweise spiralförmig angeordneter Borsten versehen. Die Rotationswerkzeuge 12 sind in Fahrtrichtung der Erntevorrichtung betrachtet nach unten abgesenkt und schließen mit dem Untergrund einen Winkel α von 30° ein. In einer anderen Ausführungsform kann er Neigungswinkel auch 45° betragen. An der Vorderseite und an der Unterseite des Gehäuses 10 ist eine Öffnung 14 vorgesehen, in welche der abzuerntende Teil der jeweiligen Pflanze in das Gehäuse 10 eintreten kann. Diese Öffnung 14 erstreckt sich über die gesamte Länge des Gehäuses 10, damit die Pflanze nach ihrer Bearbeitung unbeschädigt aus dem Gehäuse 10 wieder austreten kann.

An der Vorderseite des Gehäuses 10 sind im Bereich der Öffnung 14 am Rand des Gehäuses 10 eine Anzahl von ersten Luftdüsen 16 vorgesehen, aus denen eingespeiste Druckluft in das Gehäuse 10 gelangt. Diese Luftdüsen 16 sind sowohl rechts als auch links der Öffnung 14 am Rand des Gehäuses 10 angeordnet und so ausgerichtet, dass die aus benachbarten Luftdüsen 16 austretenden Luftströme in einem spitzen Winkel aufeinander treffen, wobei die Luftströme im Wesentlichen in Richtung einer am gegenüberliegenden Ende der Rotationswerkzeuge 12 angeordneten Transportleitung 18 ausgerichtet sind. Dabei sind die aus den Luftdüsen 16 austretenden Luftströme so eingestellt, dass sie alle zusammen eine Luftschleuse bilden und somit die Öffnung 14 im vorderen Bereich des Gehäuses 10 quasi verschließen.

Im Bereich unterhalb der Rotationswerkzeuge 12 sind nahe der Öffnung 14 am Rand des Gehäuses 10 eine Anzahl von zweiten Luftdüsen 20 angeordnet, die so ausgerichtet sind, dass der aus den Luftdüsen 20 austretende Luftstrom die Rotationswerkzeuge 12 um- oder durchströmt. Die Luftdüsen 20 sind so ausgerichtet, dass die aus benachbarten Luftdüsen 20 austretenden Luftströme ebenfalls in einem spitzen Winkel aufeinander treffen. Außerdem sind die Luftdüsen 16, 20 so ausgelegt, dass der aus den Luftdüsen 20 austretende Luftstrom eine geschlossene Luftschleuse bildet, so dass versehentlich herabfallendes Erntegut vom Luftstrom erfasst und wieder nach oben transportiert wird.

Im vorderen Bereich des Gehäuses 10 ist oberhalb der Luftdüsen 16 eine Querverteilung 22 vorgesehen, aus der ein zweiter Luftstrom in das Gehäuse 10 geleitet wird. Dieser zweite Luftstrom ist direkt auf die Transportleitung 18 gerichtet und wird dabei von einer Abdeckhaube 24 des Gehäuses 10 geleitet.

Im Bereich vor dem Gehäuse 10 ist sowohl rechts als auch links der Öffnung 14 je eine Pflanzenzuführeinrichtung 26, 28 vorgesehen, die nach vorne unten spitz zulaufend ausgebildet ist. Mit dieser Pflanzenzuführeinrichtung sollen die Pflanzen aufgerichtet und/oder vereinzelt werden, um kontrolliert in das Gehäuse 10 geführt zu werden.

In einer anderen hier nicht dargestellten Ausführungsform sind die Rotationswerkzeuge V-förmig angeordnet. Hierdurch wird das Zuführen der einzelnen Pflanzen sehr viel schonender durchgeführt, da die vorne auseinanderstehenden Rotationswerkzeuge die jeweilige Pflanze erst ein wenig und dann immer mehr traktieren. Dabei können einzelne Blätter oder Zweige derart aufgerichtet werden, dass sie schonend bearbeitet werden können.

In einer weiteren, hier nicht dargestellten Ausführungsform ist die Erntevorrichtung als Handernter ausgelegt, welcher von einer Person getragen und bedient werden kann.

In noch einer anderen, hier nicht dargestellten Ausführungsform werden mehrere Erntevorrichtungen zu einer Einheit zusammengefasst und an einem Fahrzeug angebracht, so dass die Ernte sehr effektiv erfolgen kann.

Nachfolgend wird die Arbeitsweise der erfindungsgemäßen Erntevorrichtung im Detail wie folgt beschrieben:

Die Erntevorrichtung 10 wird zunächst so weit über dem Boden platziert, dass die Unterseite der Erntevorrichtung unterhalb der abzuerntenden Teile der Pflanze angeordnet ist und dann mit der Pflanzenzuführeinrichtung 26, 28 nach vorne bewegt, so dass einzelne Pflanzen zwischen der Pflanzenzuführeinrichtung 26 und der Pflanzenzuführeinrichtung 28 erfasst werden. Durch die nach vorne unten spitz zulaufenden Pflanzenzuführeinrichtungen 26, 28 werden die Pflanzen dabei von benachbarten Pflanzen getrennt und vereinzelt und gleichzeitig eventuell aufgerichtet. Auch werden einzelne Zweige oder Blätter durch die Pflanzenzuführeinrichtung nach oben bewegt und legen sich zumindest teilweise an die Pflanze an. Hierdurch wird die Pflanze zwischen zwei benachbarte Walzen 12 geführt.

Die gegenläufig rotierenden Rotationswerkzeuge 12 lösen aus dem zu bearbeitenden Teil der Pflanze reife Samen, Früchte oder Blüten von der Pflanze ab. Es versteht sich, dass je nach Pflanzenart und je nach abzuerntendem Erntegut geeignete Rotationswerkzeuge 12, respektive geeignete Borsten und geeignete Formen, ausgewählt werden, und dass die Drehzahl der Rotationswerkzeuge 12 ebenfalls optimal angepasst wird, um eine schonende Ernte durchzuführen.

Die gegenläufig rotierenden Rotationswerkzeuge 12 schleudern das Erntegut nach oben. Unterstützt wird dieser Effekt durch den aus den Luftdüsen 20 unterhalb der Rotationswerkzeuge 12 austretenden Luftstrom, der die von der Pflanze abgetrennten Teile von unten erfasst und ebenfalls nach oben transportiert. Der von den Luftdüsen 16 austretende Luftstrom ist im Wesentlichen in Richtung der Transportleitung ausgerichtet und erfasst das von den Rotationswerkzeugen 12 nach oben geschleuderte Transportgut und transportiert dieses zur Transportleitung 18. Unterstützt wird dieser Effekt durch einen zweiten, aus der Querverteilung 22 austretenden Luftstrom, der sich mit dem aus den Luftdüsen 16 austretenden Luftstrom vereint, um das Ernte-gut in die Transportleitung 18 zu transportieren.

Der aus den Luftdüsen 16, 20 austretende Luftstrom ist so ausgelegt, dass hierdurch eine Luftschleuse im Bereich der Öffnung 14 entsteht. Hierdurch wird erreicht, dass beispielsweise bereits durch die Bewegung und Zuführung der Pflanzen herausfallende Samen, Früchte oder Blüten erfasst und zur Transportleitung 18 transportiert werden. Im Bereich der Rotationswerkzeuge 12 herunterfallendes Erntegut wird von dem aus den Luftdüsen 20 austretenden Luftstrom, respektive von der Luftschleuse im Bereich der Öffnung 14 unterhalb der Rotationswerkzeuge 12 erfasst und wieder nach oben transportiert, so dass auch dieses Erntegut nicht verloren geht.

Die trichterförmige Ausgestaltung des Beginns der Transportleitung 18 erleichtert dabei den Eintritt der Druckluft und des Erntegutes in die Transportleitung 18. Innerhalb der Transportleitung 18 wird das Erntegut dann in einen Sammelbehälter oder zur weiteren Verarbeitung transportiert. Zur Unterstützung der Druckluftschleuse beziehungsweise des zweiten Luftstromes kann in der Transportleitung 18 ein Unterdruck angelegt werden, so dass hier auch ein gewisser Saugeffekt entsteht.

Die hier beschriebene Erntevorrichtung kann zum Reinigen der Pflanzen, zum Sammeln von Schädlingen, zum Entfernen von abgestorbenen Bestandteilen oder zum Benetzen der Pflanze mit Wasser und/oder mit Pflanzenschutzmitteln verwendet werden.

### Bezugszeichenliste:

- 10: Gehäuse
- 12: Rotationswerkzeug
- 14: Öffnung
- 16: Luftdüse
- 18: Transportleitung
- 20: Luftdüse
- 22: Querverteilung
- 24: Abdeckhaube
- 26: Pflanzenzuführeinrichtung
- 28: Pflanzenzuführeinrichtung

## Patentansprüche

1. Erntevorrichtung zum Ernten von Bestandteilen einer Pflanze, insbesondere von Samen, Früchten, Blüten oder anderen Bestandteilen einer Pflanze, mit zwei in einem Gehäuse (10) angeordneten und um ihre Längsachsen gegenläufig rotierenden Rotationswerkzeugen (12), wobei im Gehäuse (10) eine Öffnung (14) zum Eintritt eines Teiles der Pflanze vorgesehen ist, so dass die Pflanzen zwischen die Rotationswerkzeuge (12) geleitet und derart bearbeitet werden, dass sich Samen, Früchte, Blüten und/oder andere Bestandteile von der Pflanze lösen und nach oben schleudern,
**gekennzeichnet durch**
eine derart am Gehäuse (10) angebrachte Druckluftschleuse, dass im Gehäuse (10) ein Luftstrom erzeugt wird, der die gelösten Bestandteile der Pflanze aus dem Gehäuse (10) heraus in eine Transportleitung (18) transportiert.

2. Erntevorrichtung nach Anspruch 1,
**dadurch gekennzeichnet,**
**dass** die Druckluftschleuse eine Anzahl von Luftauslässen, insbesondere erste Luftdüsen (16) und/oder zweite Luftdüsen (20), umfasst, welche am Rand des Gehäuses (10) nahe der Öffnung (14) angebracht sind.

3. Erntevorrichtung nach Anspruch 2,
**dadurch gekennzeichnet,**
**dass** zumindest einige der ersten Luftdüsen (16) der Druckluftschleuse in Richtung der Transportleitung (18) ausgerichtet sind.

4. Erntevorrichtung nach einem der Ansprüche 2 oder 3,
**dadurch gekennzeichnet,**
**dass** zumindest einige der zweiten Luftdüsen (20) quer zur Längsachse der Walzen (12) ausgerichtet und unterhalb der Rotationswerkzeuge (12) angeordnet sind.

5. Erntevorrichtung nach einem der vorangehenden Ansprüche,
**dadurch gekennzeichnet,**
**dass** zumindest einige ersten und/oder zweiten Luftdüsen (16, 20) der Druckluftschleuse so ausgerichtet sind, dass der Luftstrom die Öffnung (14) des Gehäuse (10) analog einer Luftschleuse verschließt.

6. Erntevorrichtung nach einem der vorangehenden Ansprüche ,
**gekennzeichnet durch**
eine Querverteilung (22) aus der ein zweiter Luftstrom in das Gehäuse (10) eintritt.

7. Erntevorrichtung nach Anspruch 6,
**dadurch gekennzeichnet,**
**dass** der zweite Luftstrom entlang einer Abdeckhaube (24) zur Transportleitung (18) geleitet wird.

8. Erntevorrichtung nach einem der vorangehenden Ansprüche,
**dadurch gekennzeichnet,**
**dass** die Transportleitung (18) einen zumindest in einer Dimension trichterförmigen Einlass besitzt.

9. Erntevorrichtung nach einem der vorangehenden Ansprüche,
**gekennzeichnet durch**
eine am Gehäuse (10) angebrachte Pflanzenzuführeinrichtung (26, 28).

10. Erntevorrichtung nach einem der vorangehenden Ansprüche,
**dadurch gekennzeichnet,**
**dass** die Rotationswerkzeuge V-förmig angeordnet sind.

11. Erntevorrichtung nach einem der vorangehenden Ansprüche,
**dadurch gekennzeichnet,**
**dass** die Rotationswerkzeuge (12) in Fahrtrichtung nach unten geneigt angeordnet sind, wobei der Neigungswinkel α zwischen 0° und 90°, vorzugsweise 45° beträgt.

12. Ernteverfahren zum Ernten von Bestandteilen einer Pflanze, insbesondere von Samen, Früchten, Blüten oder anderen Bestandteilen einer Pflanze, wobei die Bestandteile einer Pflanze durch in einem Gehäuse (10) gehaltene, gegenläufig rotierende Rotationswerkzeuge (12) gelöst und nach oben geschleudert werden,
**dadurch gekennzeichnet,**
**dass** die derart gelösten Bestandteile der Pflanze von einem Luftstrom erfasst und in eine Transportleitung (18) gebracht werden.

13. Ernteverfahren nach Anspruch 12,
**dadurch gekennzeichnet,**
**dass** der Luftstrom eine Luftschleuse bildet und die Öffnungen (14) des Gehäuses (10) strömungsmäßig verschließt.

14. Ernteverfahren nach einem der Ansprüche 12 oder 13,
**dadurch gekennzeichnet,**
**dass** der Luftstrom nahe der Öffnungen (14) des Gehäuses (10) einsetzt und eine zur Transportleitung (18) hin gerichtete Kraft entfaltet.

15. Ernteverfahren nach einem der Ansprüche 12 bis 14,
**gekennzeichnet durch**
einen zweiten Luftstrom, der oberhalb der Rotationswerkzeuge (12) in Richtung der Transportleitung (18) verläuft.

16. Ernteverfahren nach einem der Ansprüche 12 bis 15,
**gekennzeichnet durch**
einen quer zur Längsrichtung der Rotationswerkzeuge (12) ausgerichteten Teilluftstrom, der die Bewegung der gelösten Bestandteile nach oben unterstützt.

17. Ernteverfahren zum Ernten von Bestandteilen einer Pflanze, insbesondere von Samen, Früchten, Blüten oder anderen Bestandteilen einer Pflanze, wobei die Bestandteile einer Pflanze durch in einem Gehäuse (10) gehaltene, gegenläufig rotierende Rotationswerkzeuge (12) gelöst und nach oben geschleudert werden,
**dadurch gekennzeichnet,**
**dass** die Rotationswerkzeuge (12) so eingestellt sind, dass nur die wirklich reifen Samen, Früchte, Blüten oder anderen Bestandteile geerntet werden, wobei die verbleibenden Samen, Früchte, Blüten oder anderen Bestandteile einer Pflanze zu einem späteren Zeitpunkt geerntet werden.
